(19) Europäisches Patentamt
European Patent Office
Office européen des brevets

(11) **EP 3 271 869 B1**

(12) **FASCICULE DE BREVET EUROPEEN**

(45) Date de publication et mention
de la délivrance du brevet:
**16.10.2019 Bulletin 2019/42**

(21) Numéro de dépôt: **16715016.8**

(22) Date de dépôt: **15.03.2016**

(51) Int Cl.:
*G06K 9/00* *(2006.01)*    *G06K 9/20* *(2006.01)*
*G06K 9/62* *(2006.01)*

(86) Numéro de dépôt international:
**PCT/FR2016/050574**

(87) Numéro de publication internationale:
**WO 2016/146937 (22.09.2016 Gazette 2016/38)**

(54) **PROCÉDÉ DE TRAITEMENT D'UN SIGNAL ASYNCHRONE**

VERFAHREN ZUR VERARBEITUNG EINES ASYNCHRONEN SIGNALS

METHOD FOR PROCESSING AN ASYNCHRONOUS SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.03.2015 FR 1552155**

(43) Date de publication de la demande:
**24.01.2018 Bulletin 2018/04**

(73) Titulaires:
• **Sorbonne Université**
**75006 Paris (FR)**
• **Centre National de la Recherche Scientifique
(CNRS)**
**75016 Paris (FR)**
• **INSERM - Institut National de la Santé et de la
Recherche Médicale**
**75013 Paris (FR)**

(72) Inventeurs:
• **SIO-HOÏ, Ieng**
**93100 Montreuil (FR)**
• **RYAD, Benosman**
**93500 Pantin (FR)**
• **BERTRAM, Shi**
**Hong Kong (CN)**

(74) Mandataire: **Cabinet Plasseraud
66, rue de la Chaussée d'Antin
75440 Paris Cedex 09 (FR)**

(56) Documents cités:

• **ZHENJIANG NI ET AL: "Asynchronous
Event-Based Visual Shape Tracking for Stable
Haptic Feedback in Microrobotics", IEEE
TRANSACTIONS ON ROBOTICS, IEEE SERVICE
CENTER, PISCATAWAY, NJ, US, vol. 28, no. 5, 1
octobre 2012 (2012-10-01), pages 1081-1089,
XP011474264, ISSN: 1552-3098, DOI:
10.1109/TRO.2012.2198930**
• **GEORG WIESMANN ET AL: "Event-driven
embodied system for feature extraction and
object recognition in robotic applications",
COMPUTER VISION AND PATTERN
RECOGNITION WORKSHOPS (CVPRW), 2012
IEEE COMPUTER SOCIETY CONFERENCE ON,
IEEE, 16 juin 2012 (2012-06-16), pages 76-82,
XP032206761, DOI:
10.1109/CVPRW.2012.6238898 ISBN:
978-1-4673-1611-8**
• **SCHRAML S ET AL: "A real-time pedestrian
classification method for event-based dynamic
stereo vision", COMPUTER VISION AND
PATTERN RECOGNITION WORKSHOPS
(CVPRW), 2010 IEEE COMPUTER SOCIETY
CONFERENCE ON, IEEE, PISCATAWAY, NJ,
USA, 13 juin 2010 (2010-06-13), pages 93-99,
XP031728957, ISBN: 978-1-4244-7029-7**
• **GARRICK ORCHARD ET AL: "HFirst: A Temporal
Approach to Object Recognition", IEEE
TRANSACTIONS ON PATTERN ANALYSIS AND
MACHINE INTELLIGENCE, vol. 37, no. 10, 14
janvier 2015 (2015-01-14), pages 2028-2040,
XP055242818, USA ISSN: 0162-8828, DOI:
10.1109/TPAMI.2015.2392947**

**Description**

La présente invention concerne le domaine du traitement de signal asynchrone, notamment pour la détection de formes dans ce signal.

Diverses techniques de traitement de signal vidéo ont été historiquement développées. Elles reposent en général sur l'approche tramée traditionnelle.

Il existe des capteurs asynchrones (DVS, ATIS). Ces capteurs peuvent remplacer avantageusement des caméras traditionnelles.

Mais le traitement du signal est moins intuitif que dans le monde des caméras tramées. Si certains algorithmes ont été mis au point pour traiter certaines familles de problèmes (ex. flot optique, suivi de formes), d'autres problèmes restent peu ou pas explorés ou sont d'une résolution plus délicate.

Cela est notamment le cas pour la reconnaissance de formes.

Afin de détecter des formes et/ou des mouvements, les procédés actuels (i.e. utilisant des données vidéo en provenance de caméras classiques) cherchent à identifier certaines caractéristiques visuelles propres à un ensemble de pixels situés à proximité dans les données vidéo en question.

Ces caractéristiques visuelles sont le plus souvent appréhendées par l'homme de l'art comme une information spatiale d'une image (même si cette information spatiale peut être en mouvement).

Dès lors, l'information temporelle de données vidéo est souvent négligée : tout au plus, il peut être recherché une variation/évolution d'une caractéristique visuelle entre deux ou plusieurs images (ou trames) des données vidéo.

La négligence de la composante temporelle peut s'expliquer principalement par la technologie d'acquisition habituelle des vidéo : les données vidéo sont le fruit d'une acquisition produisant un grand nombre d'images statiques (ou *frame* en anglais, trame en français).

Cette technologie d'acquisition des vidéos a conditionné historiquement la manière dont sont traitées ou affichées les vidéos. L'existence de cette succession d'images statiques rend les informations temporelles (ou dynamiques) des données vidéo difficilement manipulables.

S'il est possible d'augmenter le nombre d'images par seconde des données vidéo, il est rare que la fréquence de ces images dépasse 100Hz, tant pour des questions de limites matérielles au niveau de l'acquisition que pour des questions de traitement en temps réel de ces données avec les outils classiques de détection de forme.

Il existe ainsi un besoin pour la détection de formes fiable et pouvant être utilisé en exploitant au mieux l'information temporelle des données vidéo.

La présente invention vient ainsi améliorer la situation.

Contrairement aux caméras classiques qui enregistrent des images successives à des instants d'échantillonnage réguliers, il a été développé des rétines biologiques inspirées du fonctionnement de l'oeil humain. Les rétines biologiques ne transmettent que peu d'informations redondantes sur la scène à visualiser, et ce de manière asynchrone.

Des capteurs de vision asynchrones basés sur événement délivrent des données numériques compressées sous forme d'événements.

Une présentation de tels capteurs peut être consultée dans « Activity-Driven, Event-Based Vision Sensors », T. Delbrück, et al., Proceedings of 2010 IEEE International Symposium on Circuits and Systems (ISCAS), pp. 2426-2429. Les capteurs de vision basés sur événement ont pour avantage d'enlever de la redondance, de réduire les temps de latence et d'augmenter la gamme dynamique par rapport aux caméras classiques.

La sortie d'un tel capteur de vision peut consister, pour chaque adresse de pixel, en une séquence d'événements asynchrones représentatifs des changements de réflectance de la scène au moment où ils se produisent.

Chaque pixel du capteur est indépendant et détecte des changements d'intensité supérieurs à un seuil depuis l'émission du dernier événement (par exemple un contraste de 15% sur le logarithme de l'intensité). Lorsque le changement d'intensité dépasse le seuil fixé, un événement ON ou OFF est généré par le pixel selon que l'intensité augmente ou diminue (capteurs DVS). Certains capteurs asynchrones associent les événements détectés à des mesures d'intensité lumineuse (capteurs ATIS).

Le capteur n'étant pas échantillonné sur une horloge comme une caméra classique, il peut rendre compte du séquencement des événements avec une très grande précision temporelle (par exemple, de l'ordre de 1 $\mu$s). Si on utilise un tel capteur pour reconstruire une séquence d'images, on peut atteindre une cadence d'images de plusieurs kilohertz, contre quelques dizaines de hertz pour des caméras classiques.

La grande précision temporelle de ces caméras peut permettre d'exploiter au mieux l'information temporelle d'une vidéo.

Néanmoins, le traitement des événements en provenance de ces capteurs peut être complexe, car les événements sont des concepts ponctuels en temps (t) et dans l'espace (x,y). Dès lors, leur traitement et leur analyse peuvent être difficiles.

Il existe ainsi un besoin de créer des instruments simples et manipulables pour faire une analyse pertinente d'un signal issu d'un capteur asynchrone.

L'analyse doit notamment inclure les dimensions spatiales et la dimension temporelle pour faciliter l'identification de caractéristiques spatio-temporelles dans les événements extrêmement nombreux que délivre un tel capteur, sans perdre la dynamique de celui-ci.

L'article ZHENJIANG N. ET AL: "Asynchronous Event-Based Visual Shape Tracking for Stable Haptic Feedback in Microrobotics", IEEE TRANSACTIONS ON ROBOTICS, IEEE SERVICE CENTER, PISCATAWAY, NJ, US, vol. 28, no. 5, 1 octobre 2012 (2012-10-01), pages 1081-1089, ISSN: 1552-3098, DOI: 10.1109/ TRO.2012.2198930 divulgue une méthode pour manipuler un objet à l'aide d'une pince robotique. Une caméra vient compléter un système de pince robotique comprenant également une rétine DVS en silicium, ladite caméra étant uniquement utilisée pour la détection d'objets statiques. Les plans focaux du DVS (128x128 pixels) et de la caméra (659x494 pixels) sont liés par une transformée homographique. Au cours de l'application, le cercle correspondant à la sphère à manipuler est détecté à l'aide d'une transformée de Hough via la caméra classique. Une fois le cercle détecté, son emplacement est converti dans le système de coordonnées du plan focal de la rétine basée sur les événements afin de permettre la manipulation de l'objet par la pince robotique.

L'article WIESMANN G. ET AL: "Event-driven embodied system for feature extraction and object recognition in robotic applications", COMPUTER VISION AND PATTERN RECOGNITION WORKSHOPS (CVPRW), 2012 IEEE COMPUTER SOCIETY CONFERENCE ON, IEEE, 16 juin 2012 (2012-06-16), pages 76-82, DOI: 10.1109/ CVPRW.2012.6238898ISBN: 978-1-4673-1611-8 divulgue un système reposant sur le traitement de signal provenant d'une caméra asynchrone pour l'extraction de caractéristiques et la reconnaissance d'objet pour des applications robotiques. Le traitement repose sur un clustering spatio-temporel des évènements et la détection de cercles.

L'article SCHRAML S. ET AL: 'A real-time pedestrian classification method for event-based dynamic stereo vision", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13 juin 2010 (2010-06-13), pages 93-99, ISBN: 978-1-4244-7029-7*divulgue* une méthode de reconnaissance de piétons ou cyclistes à l'aide d'un système de vision asynchrone stéréo. La méthode procède en deux étapes principales: le clustering pour regrouper des évènements asynchrones correspondant à un même objet et la classification pour identifier des piétons et des cyclistes parmi les objets obtenus à l'étape de clustering.

L'article ORCHARD G. ET AL: "HFirst: A Temporal Approach to Object Récognition", IEEE TRANSACTIONS ON PATTERN ANALYSIS AND MACHINE INTELLIGENCE, vol. 37, no. 10, 14 janvier 2015 (2015-01-14), pages 2028-2040, USA ISSN: 0162-8828, DOI: 10.1109/TPAMI.2015.2392947 divulgue une méthode de reconnaissance d'objet à l'aide d'un système de vision asynchrone. La méthode repose sur un modèle hiérarchique biologiquement inspiré, en particulier une architecture de type réseau de neurones à impulsion (en anglais "spiking neural network") exploitant l'information temporelle des impulsions ("spike timing").

La présente invention propose un procédé de reconnaissance de formes selon l'une des revendications 1 à 7 telles qu'elles sont définies en annexe.

Le « profil d'activité » d'un pixel peut être vu comme une courbe fonction du temps dont la valeur est représentative, au moins, du temps du dernier événement reçu pour ce pixel (éventuellement filtré sur une polarité donnée).

Les profils d'activité ainsi établis constituent des outils d'analyse qui résument l'apparition des événements en conservant localement leur structure spatio-temporelle.

Il a été constaté que la morphologie des profils d'activité dénote la présence de certaines formes élémentaires dans la scène observée par le capteur.

Ces profils évoluent au fur et à mesure de la réception des événements asynchrones et conservent donc la dynamique du capteur.

L'ensemble des profils d'activité constitue ce que l'on peut appeler une « carte de fraicheur » du capteur.

De nombreuses applications de traitement de signal peuvent être mises au point avec l'analyse utilisant les profils d'activité. De façon non limitative, il est possible de les utiliser pour :

- la reconnaissance de formes: il est fait référence à une bibliothèque de profils types traduisant des mouvements prédéfinis de formes élémentaires prédéfinies. Si l'analyse révèle un profil d'activité similaire à un profil type de la bibliothèque, une reconnaissance de forme a lieu et une indication de vitesse de déplacement de cette forme est estimée ;
- estimation de mouvement dans la scène : si un profil d'activité est détecté une première fois puis peu après (ou un profil d'activité très similaire) dans une région proche, une estimation sur la vitesse de déplacement d'un objet dans le champ de vision du capteur peut être déterminée ;
- estimation de profondeur dans une image (stéréo) : si un même profil d'activité (ou similaire) est détecté dans deux images provenant de deux capteurs capturant la même scène, il est possible de considérer que les pixels associés aux profils d'activités correspondent au même point de la scène capturé et ainsi déterminer la profondeur de ce point ;
- etc.

Le « signal asynchrone » peut être l'ensemble des événements provenant d'un capteur rétinien donné ou un sous-ensemble de ces événements (sous-ensemble spatial : limité à certains pixels seulement ; ou/et sous-ensemble temporel : limité à une période de temps donné).

En outre, le profil d'activité peut décroître exponentiellement en fonction du temps écoulé depuis un événement le plus récent parmi les événements successifs issus dudit pixel.

Cette décroissance exponentielle peut permettre de mieux mettre en évidence les derniers événements reçus par le capteur.

Dans un mode de réalisation particulier, le profil d'activité peut être en outre en fonction du temps écoulé depuis un événement antérieur à l'événement le plus récent parmi les événements successifs issus dudit pixel.

Il est même possible de prendre en compte tous les événements reçus pour ce pixel afin de déterminer le profil d'activité associé.

Les distances peuvent être des distances au sens mathématique. Ainsi, les distances peuvent être des distances euclidiennes, des distances de *Manhattan,* des distances de *Minkoswski,* des distances de *Tchebychev* ou toutes autres distances.

Le plus souvent, il est possible de représenter un « contexte » comme une surface dans un espace à trois dimensions (deux axes représentatifs des coordonnées des pixels et un axe sans dimension (fonction d'un temps)).

Ce contexte permet d'appréhender l'environnement proche de l'événement considéré (i.e. courant) spatialement et temporellement. Un contexte peut être vu comme un ensemble de valeurs associées à des coordonnées des pixels situés à moins d'une distance prédéterminée d'un pixel dont provient l'événement courant (dit « pixel courant »), relativement au pixel courant.

Le plus souvent, il est possible de représenter un « ensemble de composantes » graphiquement comme un « histogramme ». La terminologie « histogramme » ou « signature » est également utilisée dans la suite de la description.

Dans un autre mode de réalisation, il est possible de prendre en compte un modèle hiérarchique pour les contextes types utilisés.

La présente invention peut ainsi viser un procédé de reconnaissance de formes comprenant (un modèle hiérarchique de contextes types étant définis, chaque contexte type étant associé à une pluralité de niveau du modèle hiérarchique) :

/a/ utilisation des événements du signal asynchrone du capteur comme événements courants et utilisation des contextes types du premier niveau du modèle hiérarchique comme contextes types courants ;

/b/ exécution du procédé de traitement d'un signal asynchrone comme indiqué précédemment avec les événements courants ;

/c/ au fur et à mesure de la réception des événements courants, pour chaque pixel courant dudit capteur :

/c1/ détermination d'un contexte pour ledit pixel courant, ledit contexte étant défini comme un ensemble de profils d'activité utilisés à l'étape /b/ pour des pixels situés à moins d'une distance prédéterminée dudit pixel courant,

/c2/ détermination d'un contexte type ($C_k$) parmi les contextes types courants (504), le contexte type déterminé ayant, parmi l'ensemble des contextes types courants, une distance au contexte déterminé à l'étape /c1/ minimum,

/c3/ génération d'un événement fonction du contexte type identifié à l'étape /c2/ ;

/d/ si un niveau du modèle hiérarchique n'a pas été utilisé :

- utilisation des événements générés à l'étape /c3/ comme événements courants,

- utilisation des contextes types d'un niveau du modèle hiérarchique non encore utilisé comme contextes types courants ;

- réexécution des étapes /b/ à /e/ ;

/e/ si tous les niveaux du modèle hiérarchique ont été utilisés :

- détermination (521) d'une signature fonction d'un nombre d'occurrences de détermination des contextes types à la dernière occurrence de l'étape /c2/ ;

- détermination (524) d'une forme par une comparaison de ladite signature avec une base de signatures types.

Ces niveaux hiérarchiques permettent de procéder à une reconnaissance de proche en proche : le premier niveau hiérarchique permet d'identifier des formes très basiques, les niveaux hiérarchiques d'ordre supérieur permettant d'identifier des formes plus complexes à partir des niveaux inférieurs.

Dans un mode de réalisation particulier, la détermination d'un contexte prend en compte, séparément, les événements ayant des polarités différentes.

Par exemple, la polarité peut correspondre au fait qu'une intensité de pixel varie (ex. +1 en cas d'augmentation ou -1 en cas de diminution). La polarité peut également correspondre au contexte type identifié pour le niveau hiérarchique immédiatement inférieur.

Le fait de prendre en compte séparément les événements ayant des polarités différentes permet d'augmenter la pertinence des contextes déterminés.

Dans ce cas, un contexte peut être vu comme un ensemble de valeurs associées :

- à des coordonnées des pixels situés à moins d'une distance prédéterminée d'un « pixel courant », relativement au pixel courant ; et

- à une polarité donnée.

Avantageusement, la distance utilisée à l'étape /e/ est une distance de *Bhattacharyya* ou une distance normalisée.

Un programme informatique, mettant en oeuvre tout ou partie du procédé décrit ci-avant, installé sur un équipement préexistant, est en lui-même avantageux.

Ainsi, la présente invention vise également un programme informatique comportant des instructions pour la mise en oeuvre du procédé selon l'une des revendications 1 à 7 telles qu'elles sont définies en annexe, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

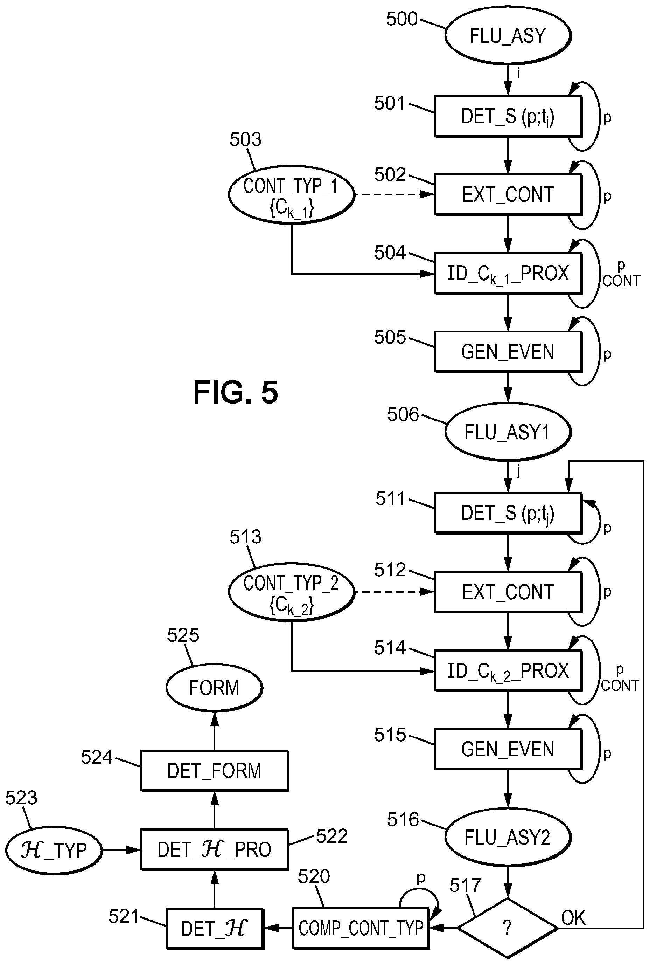

La figure 5 décrite en détail ci-après peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1 est un schéma synoptique d'un capteur asynchrone de lumière de type ATIS ;

- la figure 2 est un diagramme montrant des événements générés par un capteur asynchrone placé en regard d'une scène comportant une étoile tournante ;

- les figures 3a et 3b sont des exemples de représentation d'un « signal d'activité » pour les événements d'un pixel donné ;

- la figure 3c est un exemple d'une surface 3D représentant une carte de « fraicheur » donnée selon un mode de réalisation de l'invention ;

- la figure 3d est un exemple d'une surface 3D représentant un contexte selon un mode de réalisation de l'invention ;

- la figure 4 illustre la survenance d'événements dans le flux d'événements lorsque des cartes à jouer sont retournées ;

- la figure 5 est un exemple d'ordinogramme d'un mode de réalisation possible de l'invention ;

- les figures 6a à 6c sont des exemples de contextes types dans un mode de réalisation possible de l'invention ;

- la figure 7 illustre un dispositif pour la mise en oeuvre d'un mode de réalisation selon l'invention ;

- les figures 8a à 8c sont des exemples de performances de détection de formes pour différentes formes à reconnaitre.

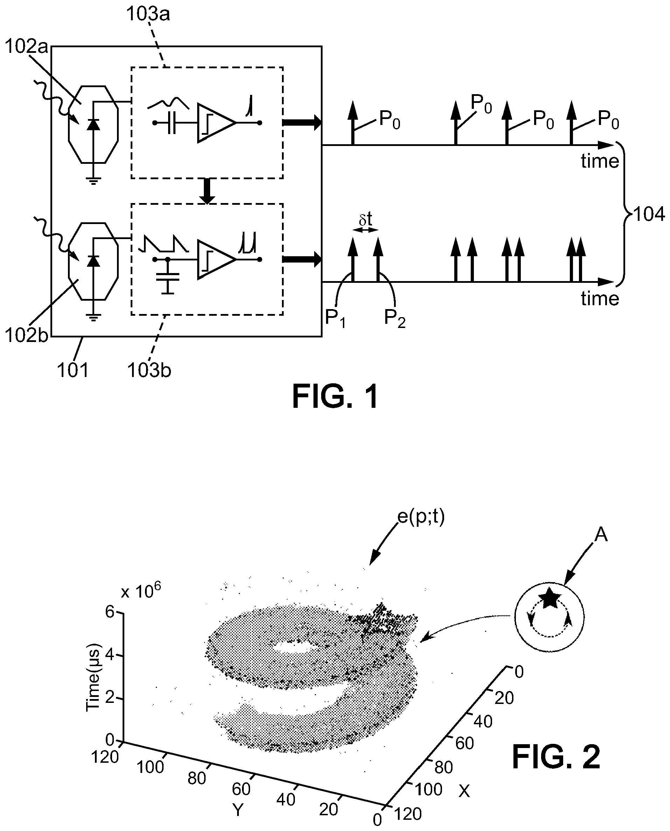

La figure 1 illustre le principe de l'ATIS.

Un pixel 101 de la matrice constituant le capteur comporte deux éléments photosensibles 102a, 102b, tels que des photodiodes, respectivement associés à des circuits électroniques de détection 103a, 103b.

Le capteur 102a et son circuit 103a produisent une impulsion $P_0$ lorsque l'intensité lumineuse reçue par la photodiode 102a varie d'une quantité prédéfinie.

L'impulsion $P_0$ marquant ce changement d'intensité déclenche le circuit électronique 103b associé à l'autre photodiode 102b. Ce circuit 103b génère alors une première impulsion $P_1$ puis une deuxième impulsion $P_2$ dès qu'une quantité de lumière donnée (nombre de photons) est reçue par la photodiode 102b.

L'écart temporel $\delta t$ entre les impulsions $P_1$ et $P_2$ est inversement proportionnel à l'intensité lumineuse reçue par le pixel 101 juste après l'apparition de l'impulsion $P_0$.

L'information asynchrone issue de l'ATIS comprend deux trains impulsions combinées pour chaque pixel (104) : le premier train des impulsions $P_0$ indique les instants où l'intensité lumineuse a changé au-delà du seuil de détection, tandis que le second train se compose des impulsions $P_1$ et $P_2$ dont l'écart temporel $\delta t$ indique les intensités lumineuses, ou niveaux de gris, correspondants.

Un événement $e(\boldsymbol{p},t)$ issu d'un pixel 101 de position p dans la matrice de l'ATIS comporte alors deux types d'information: une information temporelle donnée par la position de l'impulsion $P_0$, donnant l'instant t de l'événement, et une information de niveau de gris donnée par l'écart temporel $\delta t$ entre les impulsions $P_1$ et $P_2$.

On peut alors placer les événements provenant des pixels dans une représentation espace-temps à trois dimensions telle que celle présentée sur la figure 2. Sur cette figure, chaque point $\boldsymbol{p}$ repère un événement $e(\boldsymbol{p},t)$ engendré de manière asynchrone à un instant t au niveau d'un pixel p du capteur, de position $\begin{pmatrix} x \\ y \end{pmatrix}$, par le mouvement d'une étoile tournant à vitesse angulaire constante comme schématisé dans l'encadré A. La majeure partie de ces points se répartissent à proximité d'une surface de forme générale hélicoïdale. En outre, la figure montre un certain nombre d'événements à distance de la surface hélicoïdale qui sont mesurés sans correspondre au mouvement effectif de l'étoile. Ces événements sont du bruit d'acquisition.

Les événements $e(\boldsymbol{p},t)$ peuvent alors être définis par l'ensemble des informations suivantes :

$$e(\boldsymbol{p},t) = \begin{cases} \boldsymbol{p} \in C \subset \mathbb{R}^2 \\ pol \\ I(\boldsymbol{p},t) \end{cases}$$

avec C le domaine spatial du capteur, *pol* la polarité représentant la direction du changement de luminance (ex. 1 pour une augmentation ou -1 pour une diminution) et $I(\boldsymbol{p},t)$ le signal d'intensité lumineuse du point $\boldsymbol{p}$.

Le signal d'intensité lumineuse peut être ainsi l'ensemble des trains d'impulsions combinées 104 tel que décrit en Figure 1. Si $t_u$ représente le temps de survenance de l'événement, et l'écart entre $t_{e+,u}$ et $t_{e-,u}$ représente une valeur inversement proportionnelle à la variation d'intensité, il est possible de coder l'intensité à l'aide de trois Dirac $\delta$ de telle sorte que $I(\boldsymbol{p},t) = \delta(t - t_u) + \delta(t - t_{e+,u}) + \delta(t - t_{e-,u})$. Le signal d'intensité du pixel situé à la coordonnée $\boldsymbol{p}$ permet alors de coder temporellement les informations de luminance.

Il est possible de noter le i$^{\text{ème}}$ événement d'un capteur comme $ev(i)$, $ev(i)$ étant alors défini par l'ensemble des informations suivantes :

$$ev(i) = \begin{cases} \boldsymbol{p_i} \in C \subset \mathbb{R}^2 \\ pol_i \\ t_i \\ l_i(\boldsymbol{p_i},t_i) \end{cases}$$

avec *C* le domaine spatial du capteur, $\boldsymbol{p_i}$ le point du capteur concerné par le i$^{\text{ème}}$ événement, $pol_i$ la polarité représentant un type d'événements (par exemple, la direction du changement de luminance pour le i$^{\text{ème}}$ événement, ex. 1 pour une augmentation ou -1 pour une diminution), $t_i$ le temps de survenance du i$^{\text{ème}}$ événement et $l_i(\boldsymbol{p},t)$ le signal d'intensité lumineuse du point $\boldsymbol{p_i}$ (si cette valeur est disponible).

Afin de manipuler de manière plus simple les événements, il est possible de définir pour chaque pixel $\boldsymbol{p}$ et pour chaque polarité *pol* une fonction *S* représentative d'une « fraicheur » des événements, $S(\boldsymbol{p},pol)$ étant fonction au moins du temps $t$ de survenance du dernier événement pour ce pixel et ayant cette polarité *pol*.

Il est possible de définir la fonction *S* comme la somme, pour chaque événement $ev_p(i) = \begin{cases} p_i = p \\ pol_i = pol \\ t_p \end{cases}$

d'un pixel *p* donné et pour une polarité *pol* donnée, à un instant t donné, de la fonction primitive

$$S_{prim}(\boldsymbol{p}, pol, t) = \begin{cases} \max(h + \theta.(t_p - t), 0) \text{ si } t \geq t_p \\ 0 \text{ sinon} \end{cases}$$, *h* étant une valeur prédéterminée et θ étant un facteur prédéterminé correspondant à la vitesse de la décroissance de, la fonction primitive.

La « somme » de la fonction primitive peut être également vue mathématiquement comme une convolution :

-   de la fonction primitive $S_{prim}(\boldsymbol{p}, t) = \begin{cases} \max(h - \theta.t, 0) \text{ si } t \geq 0 \\ 0 \text{ sinon} \end{cases}$ (ou plus généralement de toute fonction décroissante),

-   avec un signal comportant un Dirac pour chaque temps $t_p$ auquel un événement $ev_p(i) = \begin{cases} p_i = p \\ pol_i = pol \\ t_p \end{cases}$ est survenu.

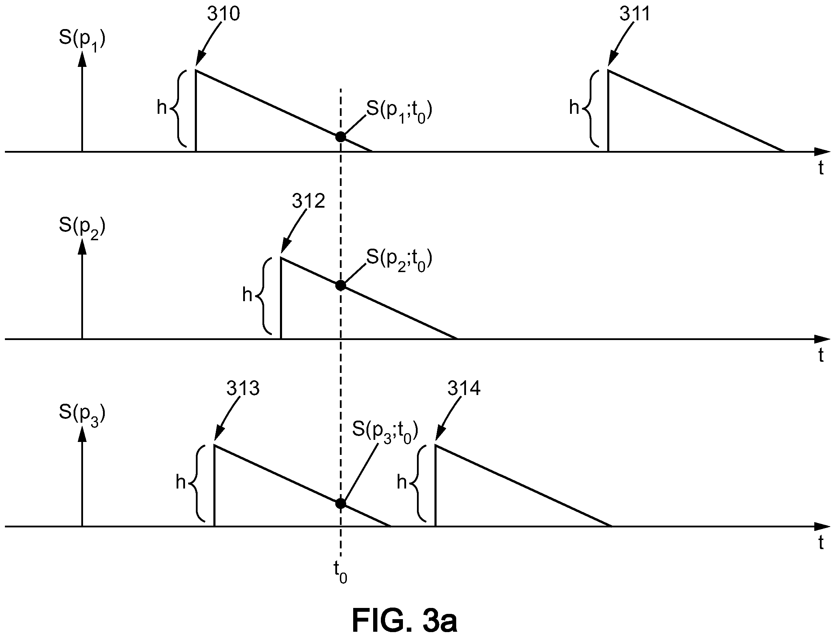

A titre d'illustration, la figure 3a montre trois signaux d'activité possibles $t \to S$, pour trois pixels p₁, p₂ et p₃ du capteur (et pour une valeur de polarité *pol* donnée).

En l'absence d'événements, la valeur de S(p₁, t), S(p₂, t) ou S(p₃, t) est nulle. Néanmoins, lors de la survenance d'un événement de polarité *pol* (par exemple, 310) au niveau du pixel p₁, S(p₁, t) prend une valeur seuil prédéterminé (ici h, cette valeur h pouvant être unitaire).

La valeur du signal d'activité S(p₁, t) décroît alors progressivement après cet événement pour tendre vers 0.

Il en va de même pour l'événement 311 pour le pixel p₁, pour l'événement 312 pour le pixel p₂, ou pour l'événement 313 / 314 pour le pixel p₃,

Si la décroissance du signal d'activité S est ici linéaire, il est possible de prévoir tout type de décroissance comme une décroissance exponentielle :

$$h.\, e^{-\frac{t - t_p}{\tau}}$$

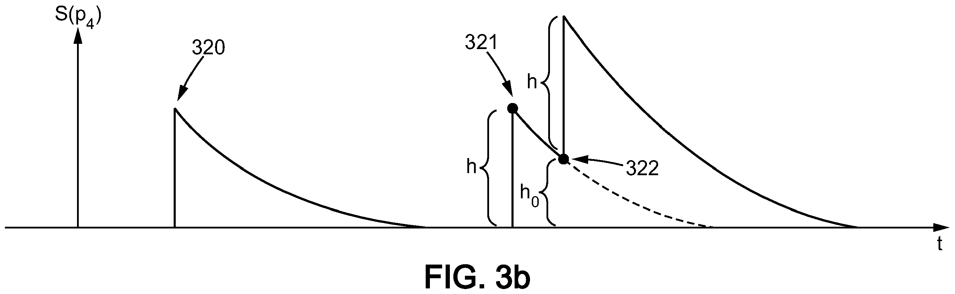

Cette décroissance exponentielle peut être illustrée par la figure 3b (voir la courbe 3b et l'événement 320).

Par ailleurs, il est possible que, lors de la survenance d'un événement pour le pixel considéré (ex. p₄ ici), la valeur de la fonction S ne soit pas négligeable par rapport à la valeur de h (ex. l'événement 321 est temporellement proche de l'événement 322).

Dans un mode de réalisation, lors de la survenance de l'événement ultérieur 322, la valeur du signal d'activité S peut être fixée à la somme (éventuellement pondérée) de la valeur courante de S juste avant l'événement 322 (i.e. h₀) et de h. Ainsi, la décroissance de la courbe S partira de la valeur h+h₀ comme le montre la figure 3b. Par ailleurs, il est possible de prévoir que la valeur de h+h₀ soit capée à une valeur h1 prédéterminée (i.e. min(h₁, h+h₀))

Dans un autre mode de réalisation, lors de la survenance de l'événement ultérieur 322, la valeur de la courbe S est fixée à la valeur h quelle que soit la valeur de h₀ (i.e. les événements antérieurs au dernier événement (i.e. l'événement ultérieur) sont ignorés). Dans cet autre mode de réalisation, il est possible de définir un temps dit « temps de dernier événement » défini comme suit :

$$T(\boldsymbol{p}, pol, i) = \max(t_j) \,|\, j < i$$

ou

$$T(\boldsymbol{p}, pol, t) = \max(t_j) \,|\, t_j < t$$

avec $t_j$ les temps d'événements survenant pour le pixel pour un pixel *p* avec la polarité *pol.*

Conceptuellement, $\boldsymbol{p} \to T(\boldsymbol{p}, pol, t)$ définit une carte des temps des derniers événements de même polarité survenus temporellement juste avant un temps de référence (i.e. *t*).

On peut alors définir, dans cet autre mode de réalisation, $p \rightarrow S(p,pol,t)$ comme étant une fonction de cet ensemble de temps $T(p,pol,t)$.

Par exemple, $p \rightarrow S(p,pol,t)$ :

$$p \rightarrow S(p,pol,t): \begin{cases} h.\, e^{-\frac{t-T(p,pol,t)}{\tau}} \text{ si } t \geq T(p,pol,t) \\ 0 \text{ sinon} \end{cases}$$

avec $\tau$ et h une constante temporelle prédéterminée (*S* peut être toute fonction décroissante avec le temps t sur un intervalle comprenant comme borne inférieure $T(p,pol,t)$).

La création d'une carte *S* de pixels représentative de la « fraicheur » d'événements de ces pixels est avantageuse, car elle permet une représentation continue et simple de concepts discontinus (i.e. les événements). Cette carte créée permet de transformer la représentation des événements dans un domaine simple d'appréhension.

Dès lors, sa création simplifie la manipulation et la comparaison des événements.

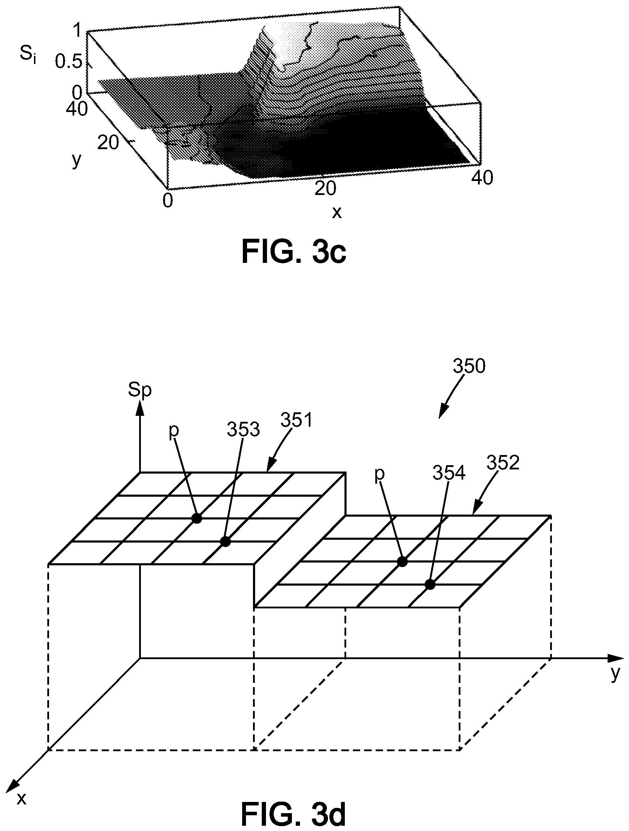

Une fois la carte de pixels $p \rightarrow S(p,pol,t)$ déterminée, il est possible de réaliser un graphique en 3D de l'amplitude de *S* en fonction des coordonnées *p,* pour un temps t et pour une valeur de polarité *pol* fixés (voir Figure 3c).

Bien entendu, *S* peut comprendre N jeux de valeurs séparés (i.e. $(p,pol) \rightarrow S(p,pol,t)$, une pour chaque valeur de polarité *pol* possible (s'il existe N valeurs de polarité possibles).

On appelle $S_p$ le « contexte » du pixel *p* l'ensemble des valeurs de $(q,pol) \rightarrow S(q,pol,t)$ pour les pixels *q* à proximité du pixel *p* (i.e. situé à une distance prédéterminée du pixel *p,* ex. distance au sens mathématique, par exemple dans un carré de côté 2R+1 centré sur le pixel *p*). Afin de représenter visuellement le contexte (comprenant plusieurs valeurs de polarité possibles), il est possible de juxtaposer plusieurs représentations de $q \rightarrow S(q,pol,t)$ pour les différentes valeurs de *pol* possibles.

Par exemple, la figure 3d peut être représentative du « contexte » 350 du pixel *p* : le plateau 351 est alors représentatif d'une valeur de la fonction $q \rightarrow S(q,1,t)$ et le plateau 352 est représentatif d'une valeur de la fonction $q \rightarrow S(q,-1,t)$ (bien entendu, les plateaux peuvent avoir toutes formes, le choix du plateau permettant simplement de faciliter la visualisation). De même, le point 353 et 354 correspond à une valeur de la fonction *S* pour un même pixel mais pour une polarité différente.

Il est possible de définir un contexte $S_p$ pour tout pixel p.

Afin de pouvoir caractériser les différents contextes possibles, il est possible de définir des contextes dits « types ».

Ces contextes types peuvent être prédéterminés ou peuvent être déterminés sur la base de l'algorithme fourni par le document D. Ballard and J. Jehee, « Dynamic coding of signed quantifies in cortical feedback circuits » Frontiers in Psychology, vol. 3 n°254, 2012 ou en utilisant une autre méthode (méthode des « k-means » par exemple).

Pour chaque contexte $S_p$ identifié pour un pixel *p,* il est possible d'associer au pixel *p* un contexte type correspondant au contexte type le plus proche de $S_p$. La distance entre le contexte $S_p$ et un contexte type peut être, par exemple, déterminé en calculant une somme des distances euclidiennes entre les valeurs du contexte $S_p$ et du contexte type pour des mêmes pixels *p* et des mêmes polarités *pol.* La distance peut être également fonction de la somme des distances euclidiennes au carré.

Si la distance calculée est au-dessus d'un certain seuil prédéterminé, il est possible de n'associer aucun contexte type au pixel *p.*

Ces contextes types $\{C_k\}$ sont définis sur un domaine spatial limité comme précédemment évoqué pour les contextes $S_p$ (ex. sur des carrés de côté 2R + 1).

Il est également possible de définir plusieurs niveaux hiérarchiques de contextes types, chaque niveau hiérarchique *m* définissant une pluralité de contextes types $\{C_{k\_m}\}$. L'intérêt de tels niveaux hiérarchiques est détaillé au regard de la description de la figure 5.

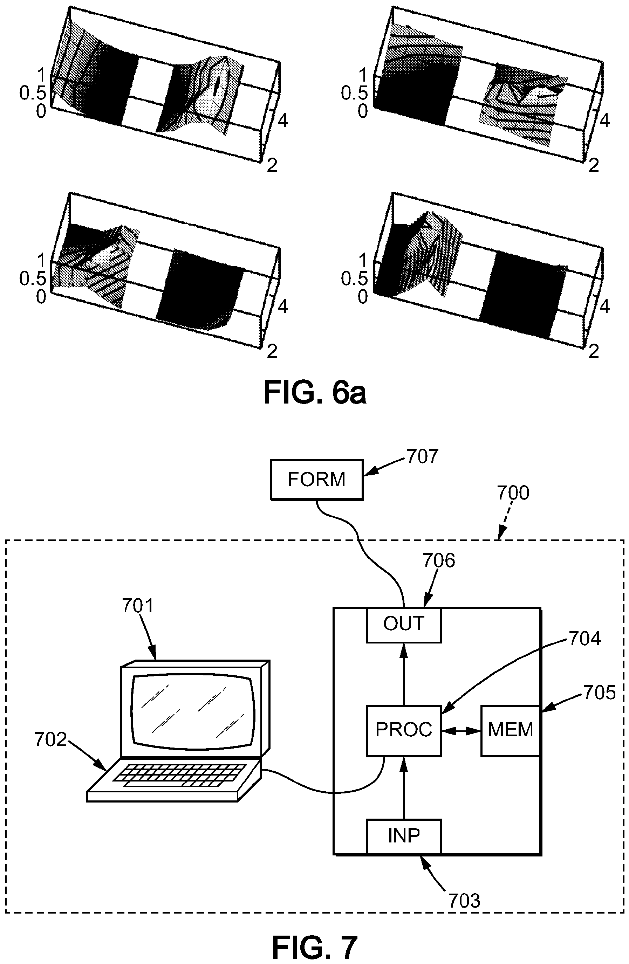

A titre d'illustration, la figure 6a illustre un premier niveau hiérarchique de contextes types possibles (i.e. taille 5x5 pixels pour une polarité de 1 (zone de gauche de chacun des contextes types) ou pour une polarité de -1 (zone de droite de chacun des contextes types)).

De plus, à un instant t donné, et après identification des contextes types $\{C_k\}$ (ou plus généralement $\{C_{k\_m}\}$ pour un niveau hiérarchique *m* fixé) associés à chaque pixel *p,* il est possible de calculer un nombre d'occurrences de chacun des contextes types pour l'ensemble des pixels *p* possibles.

Ces nombres d'occurrences calculés permettent de créer des signatures / histogrammes $\mathcal{H}$ caractérisant le flux d'événements (en ordonné, le nombre d'occurrences, en abscisse, l'indice du contexte type identifié).

La caractérisation du flux d'événements permettant la reconnaissance de forme peut aussi utiliser d'autres méthodes telles des Echo-State Networks ou des Réseaux de neurones récurrents.

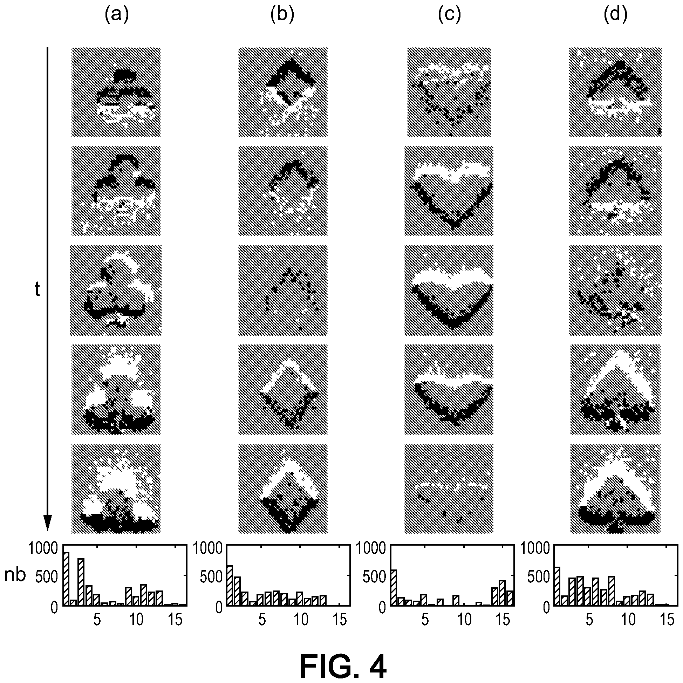

À titre d'illustration, la figure 4 illustre la survenance d'événements « ON » (points blancs) et d'événements « OFF » (points noirs) lorsque des cartes à jouer comportant un trèfle, un carreau, un coeur, et un pique sont retournées. Les histogrammes respectivement associés à chacun de flux d'événements (a), (b), (c) et (d) sont également affichés en dessous de ces flux d'événements : ces histogrammes constituent une sorte de « signature » des formes à reconnaitre dans le flux d'événements.

Il est possible de construire ces histogrammes durant un nombre prédéterminé d'entrainements (i.e. génération d'histogrammes par la présentation d'un flux d'événements représentatifs d'une même forme) : ainsi, il est possible de déterminer un « histogramme type » en moyennant les histogrammes obtenus durant l'entrainement pour une même forme et/ou un même mouvement.

Une fois ces histogrammes types déterminés, il est alors possible de déterminer à nouveau un histogramme courant à partir d'un flux d'événements et de comparer cet histogramme avec les histogrammes types déterminés durant la phase d'entrainement.

L'histogramme type ayant une distance la plus proche avec l'histogramme courant peut alors permettre d'identifier la forme correspondant au flux d'événements.

Il est en outre possible que les k-plus proches histogrammes types soient retournées (éventuellement avec une note correspondant à leur proximité).

La distance entre deux histogrammes $\mathcal{H}_1$ et $\mathcal{H}_2$ peut être calculée comme une distance mathématique entre deux vecteurs ayant pour coordonnées les nombres d'occurrences pour chacun des contextes types :

$$d(\mathcal{H}_1; \mathcal{H}_2) = \|\mathcal{H}_1 - \mathcal{H}_2\|$$

Il est également possible de calculer une distance normalisée comme suit :

$$d^N(\mathcal{H}_1; \mathcal{H}_2) = \left\|\frac{\mathcal{H}_1}{card(\mathcal{H}_1)} - \frac{\mathcal{H}_2}{card(\mathcal{H}_2)}\right\|$$

avec $card(\mathcal{H}_j)$ le nombre de contextes types (i.e. barre verticale) de l'histogramme $\mathcal{H}_j$ .

La distance de *Bhattacharyya* peut également être utilisée en remplacement de la distance classique :

$$d^B(\mathcal{H}_1; \mathcal{H}_2) = -ln \sum_i \left(\left\|\frac{\mathcal{H}_1(i)}{card(\mathcal{H}_1)} \cdot \frac{\mathcal{H}_2(i)}{card(\mathcal{H}_2)}\right\|\right)$$

avec $\mathcal{H}_j(i)$ le nombre d'occurrences du ième contexte type de l'histogramme $\mathcal{H}_j$.

Toute autre distance mathématique peut également être utilisée.

Dès lors, il est possible de considérer que la forme correspondant à l'histogramme type associé est survenue dans le flux d'événements.

Grâce à cet histogramme type, une reconnaissance de forme est ainsi possible.

La figure 5 est un exemple d'ordinogramme d'un mode de réalisation possible de l'invention.

Sur réception d'un événement i d'un flux d'événement 500 provenant d'un capteur asynchrone et associé à temps $t_i$, il est possible de déterminer ou de mettre à jour (étape 501) les valeurs de $S(\boldsymbol{p},pol,t_i)$ pour chaque pixel $\boldsymbol{p}$ du capteur et pour chaque valeur de *pol,* comme cela est indiqué précédemment : cette étape permet de créer ou de mettre à jour la carte de « fraicheur » du capteur.

Pour l'étape 501, la constante de temps utilisée pour la décroissance de la fonction primitive de $S$ est notée $\tau_1$. Ainsi, nous pouvons, par exemple, avoir :

$$S(\boldsymbol{p}, pol, t_i) = h.e^{-\frac{t_i - T(\boldsymbol{p},pol,t_i)}{\tau_1}}$$

Une fois cette détermination effectuée, il est possible, pour chaque pixel *p* du capteur, d'extraire un contexte $S_p$ (étape 502) de la carte de fraicheur précédemment calculée à l'étape 501 : cette extraction permet d'isoler certaines

valeurs de $S(\boldsymbol{q},pol,t_i)$ pour les pixels $q$ à proximité spatiale $N_p$ du pixel $p$ considéré et pour une valeur de polarité $pol$ donnée. À titre d'illustration, $N_{p\_1}$ peut définir un carré ou un rectangle centré autour de la position spatiale $\boldsymbol{p}$ considérée. La proximité spatiale $N_{p\_1}$ peut être définie afin que les contextes ainsi extraits soient de dimensions égales aux dimensions des contextes types du premier niveau hiérarchique 503 ($C_{k\_1}$), afin d'être comparées à ces derniers.

A titre d'illustration, la figure 6a illustre un premier niveau hiérarchique de contextes types possibles (i.e. taille 5x5 pixels pour une polarité de 1 (zone de gauche de chacun des contextes types) ou pour une polarité de -1 (zone de droite de chacun des contextes types)).

La comparaison du contexte déterminé $S_{p\_1}$ et associé au pixel $\boldsymbol{p}$ avec les contextes types possibles $\{C_{k\_1}\}$ du premier niveau hiérarchique permet d'identifier le contexte type le plus proche de $S_{p\_1}$ (étape 504) comme indiqué précédemment.

Cette identification du contexte type le plus proche $C_{k\_1prox}$ parmi avec les contextes types possibles $\{C_{k\_1}\}$ du premier niveau hiérarchique permet de générer, pour le pixel $\boldsymbol{p},$ un événement $ev_1$ indiquant le contexte type associé à ce pixel $\boldsymbol{p}$ (étape 505) :

$$ev_1(\boldsymbol{p}) = \begin{cases} t \\ C_{k\_1prox} \end{cases}$$

avec t le temps courant.

Si aucun contexte type le plus proche n'est identifié (voir supra), aucun événement n'est généré.

La génération de ces événements $ev_1(\boldsymbol{p})$ constitue également un flux asynchrone d'événements (506).

Dès lors, il est possible de traiter ces événements 506 de manière similaire aux événements 500 en provenance du capteur.

Ainsi, sur réception de chaque événement j du flux d'événement 506 et associé à temps $t_j$, il est possible de déterminer ou de mettre à jour (étape 511) les valeurs d'une nouvelle carte de « fraicheur » (i.e. carte pour le deuxième niveau hiérarchique) ayant comme valeur $(\boldsymbol{p},pol) \rightarrow S_2(\boldsymbol{p},pol,t_j)$ pour chaque pixel $\boldsymbol{p}$ du capteur et pour chaque valeur de $pol$ (sachant que pour cette étape 511 les valeurs de $pol$ sont représentatives du contexte type identifié lors de l'étape 504 pour le premier niveau hiérarchique, i.e. 4 contextes types possible dans le cadre de la figure 6a, chaque contexte type ayant deux polarités), comme cela est indiqué précédemment.

Pour l'étape 511, la constante de temps utilisée pour la décroissance de la fonction primitive est notée $\tau_2$ avec $\tau_2 \geq \tau_1$. Ainsi, nous pouvons, par exemple, avoir :

$$S_2(\boldsymbol{p}, t_j) = h.\, e^{-\frac{t_j - T(\boldsymbol{p}, t_j)}{\tau_2}}$$

Une fois cette détermination effectuée, il est possible, pour chaque pixel $p$ du capteur, d'extraire un contexte $S_{p\_2}$ (étape 512) de la carte de fraicheur précédemment calculée à l'étape 511 : cette extraction permet d'isoler certaines valeurs de $S_2(\boldsymbol{q},pol,t_i)$ pour les pixels $q$ à proximité spatiale $N_{p\_2}$ du pixel $p$ considéré et pour une valeur de polarité $pol$ donnée. À titre d'illustration, $N_{p\_2}$ peut définir un carré ou un rectangle centré autour de la position spatiale $\boldsymbol{p}$ considérée. La proximité spatiale $N_{p\_2}$ peut être définie afin que les contextes ainsi extraits soient de dimensions égales aux dimensions des contextes types du deuxième niveau hiérarchique 513 ($C_{k\_2}$), afin d'être comparées à ces derniers.

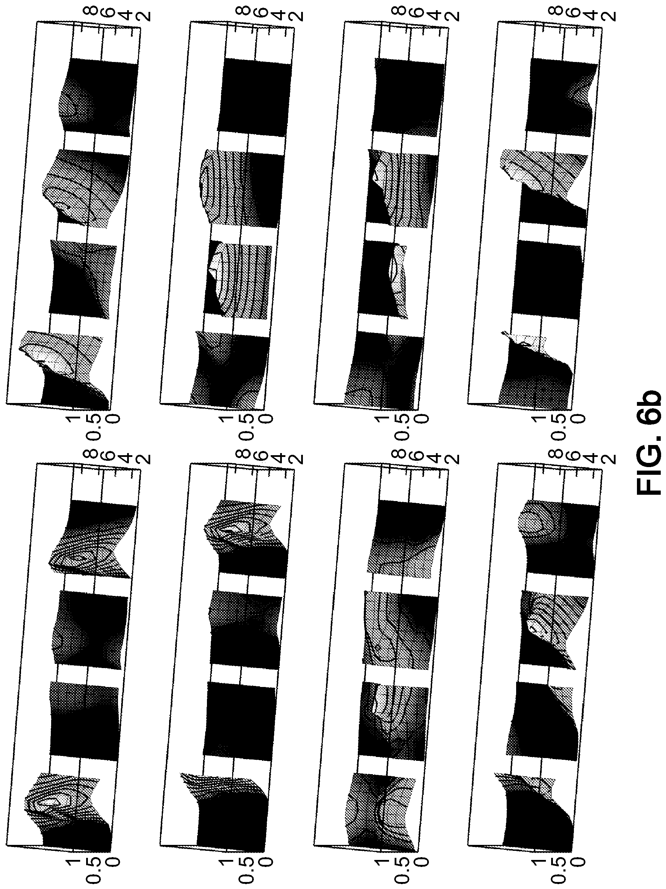

A titre d'illustration, la figure 6b illustre un deuxième niveau hiérarchique de huit contextes types possibles.

Si chaque contexte type du premier niveau hiérarchique possède deux zones (une zone pour les événements de polarité -1 (OFF) et une zone pour les événements de polarité 1 (ON), voir Figure 6a), les contextes types du deuxième niveau hiérarchique possèdent autant de zones (i.e. 4) que de contexte types dans le niveau hiérarchique immédiatement inférieur (i.e. le premier niveau hiérarchique, ici, voir Figure 6b).

Par ailleurs, les contextes types du deuxième niveau hiérarchique peuvent être tels que la proximité spatiale $N_{p\_2}$ définisse une zone plus grande que celle définie par la proximité spatiale $N_{p\_1}$ (ex. si $N_{p\_1}$ est définie par un carré de côté $2R_1+1$ alors si $N_{p\_2}$ peut être définie par un carré de côté $2R_2+1$ avec $R_2 \geq R_1$).

La comparaison du contexte déterminé $S_{p\_2}$ et associé au pixel $\boldsymbol{p}$ avec les contextes types possibles $\{C_{k\_2}\}$ du premier niveau hiérarchique permet d'identifier le contexte type le plus proche de $S_{p\_2}$ (étape 514) comme indiqué précédemment.

Cette identification du contexte type le plus proche $C_{k\_2prox}$ parmi avec les contextes types possibles $\{C_{k\_2}\}$ du deuxième niveau hiérarchique permet de générer, pour le pixel $\boldsymbol{p},$ un événement $ev_2$ indiquant le contexte type associé à ce pixel $\boldsymbol{p}$ (étape 515) :

$$ev_2(\boldsymbol{p}) = \begin{cases} t \\ C_{k\_2prox} \end{cases}$$

avec t le temps courant.

Si aucun contexte type le plus proche n'est identifié (voir supra), aucun événement n'est généré.

La génération de ces événements $ev_2(\boldsymbol{p})$ constitue également un flux asynchrone d'événements (516).

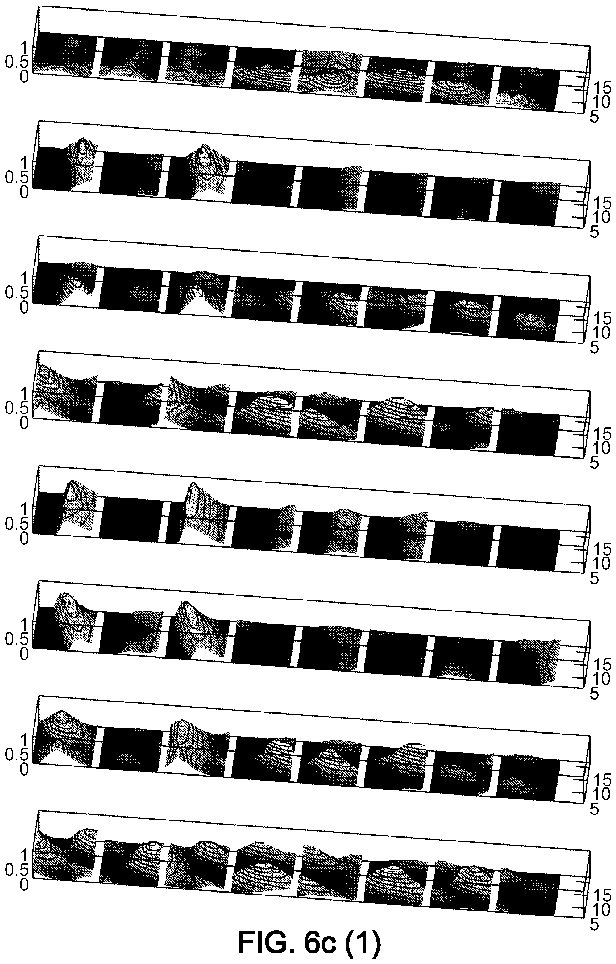

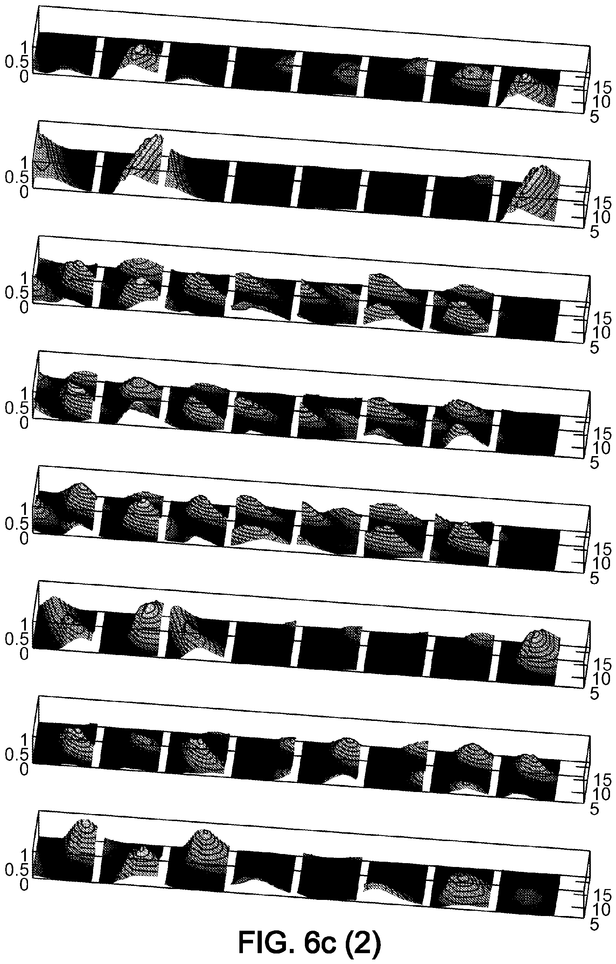

Dès lors, il est possible de traiter ces événements 516 de manière similaire aux événements 506 : s'il existe un niveau hiérarchique supérieur (test 517, sortie OK, par exemple le niveau hiérarchique de niveau trois représenté par la figure 6c (6(c)(1) et 6(c)(2))), il est possible de réitérer les étapes 511 à 515 en prenant en entrée les événements générés par le niveau hiérarchique immédiatement inférieur et en utilisant les contextes types de ce niveau hiérarchique supérieur (voir 513).

S'il n'existe pas de niveau hiérarchique supérieur, il est possible de compter le nombre d'occurrences des contextes types (513) identifiés pour tous les pixels $\boldsymbol{p}$ et pour un temps t fixé. Comme expliqué ci-dessus, ce comptage permet la détermination d'un histogramme $\mathcal{H}$ représentatif du nombre d'occurrences des contextes types identifiés (étape 521).

À partir des histogrammes déterminés à l'étape 513, il est alors possible de calculer une distance entre des histogrammes types (523) représentatifs de formes et/ou de mouvements, et ainsi déterminer l'histogramme type le plus proche (étape 522).

Grâce à cet histogramme type déterminé, il est possible de déterminer la forme et/ou le mouvement associé à celui-ci (étape 524) et ainsi retourner cette forme et/ou ce mouvement (525).

Bien entendu, si l'ordinogramme de la figure 5 montre l'exécution des étapes 520 à 524 après l'analyse d'au moins un deuxième niveau hiérarchique de contextes types, ces étapes 520 à 524 peuvent tout à fait être exécutées après les étapes 501 à 505 (i.e. avec l'analyse d'un seul niveau hiérarchique).

La figure 7 illustre un dispositif pour la mise en oeuvre d'un mode de réalisation selon l'invention.

Dans ce mode de réalisation, le dispositif comporte un ordinateur 700, comprenant une mémoire 705 pour stocker des instructions permettant la mise en oeuvre du procédé, les données relatives au flux d'événements reçu, et des données temporaires pour réaliser les différentes étapes du procédé tel que décrit précédemment.

L'ordinateur comporte en outre un circuit 704. Ce circuit peut être, par exemple :

- un processeur apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gate Array » en anglais).

Cet ordinateur comporte une interface d'entrée 703 pour la réception des événements des capteurs, et une interface de sortie 706 pour la fourniture des formes 707 identifiées dans le flux d'événement. Enfin, l'ordinateur peut comporter, pour permettre une interaction aisée avec un utilisateur, un écran 701 et un clavier 702. Bien entendu, le clavier est facultatif, notamment dans le cadre d'un ordinateur ayant la forme d'une tablette tactile, par exemple.

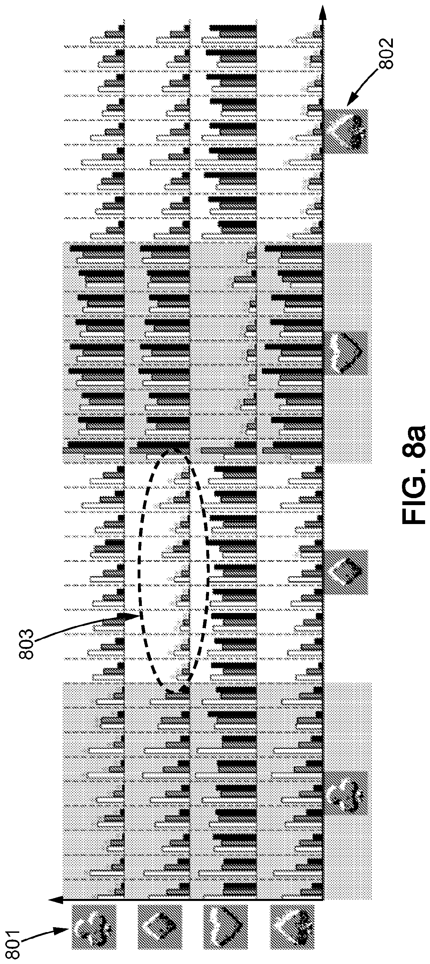

La figure 8a est un exemple de performance de détection de formes (trèfle, carreau, coeur et pique).

Chaque ligne (voir ordonnée 801) correspond aux données relatives à une forme particulière ayant été apprise (i.e. histogramme type, voir supra).

Chaque colonne (voir abscisse 802) correspond aux données relatives à une forme particulière devant être reconnues (i.e. histogramme à reconnaitre).

L'intersection d'une ligne et d'une colonne (correspondant à l'ensemble 803, par exemple) permet de visualiser la distance de l'histogramme type avec l'histogramme à reconnaitre pour plusieurs présentations de la forme (ici, 9 présentations de la forme, ces présentations sont séparées par un trait vertical pointillé) :

- la barre blanche (barre de gauche) correspond à une distance classique ;

- la barre grise (barre du milieu) correspond à une distance normalisée ;

- la barre noire (barre de droite) correspond à une distance de *Bhattacharyya.*

Les trois distances (respectivement classique, normalisée, et de *Bhattacharyya*) ainsi représentées possèdent une performance respective de 94%, 100% et 97% pour ces formes.

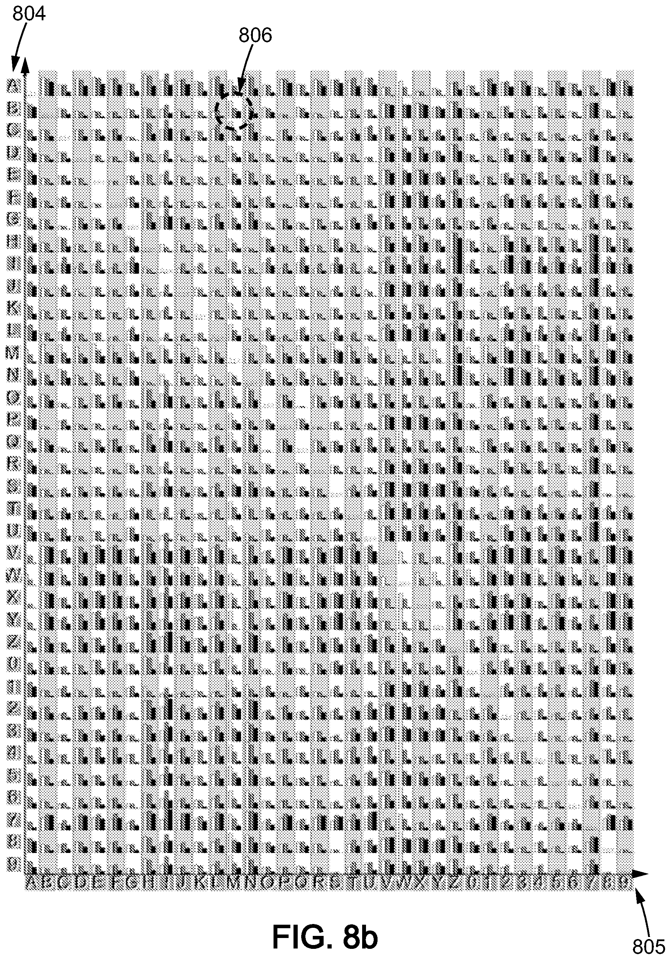

La figure 8b est un exemple de performance de détection de formes (chiffres et lettres majuscules).

Chaque ligne (voir ordonnée 804) correspond aux données relatives à une forme particulière ayant été apprise (i.e. histogramme type, voir supra).

Chaque colonne (voir abscisse 805) correspond aux données relatives à une forme particulière devant être reconnues (i.e. histogramme à reconnaitre).

L'intersection d'une ligne et d'une colonne (correspondant à l'ensemble 806, par exemple) permet de visualiser la distance de l'histogramme type avec l'histogramme à reconnaitre pour une présentation de la forme :

- la barre blanche (barre de gauche) correspond à une distance classique ;

- la barre grise (barre du milieu) correspond à une distance normalisée ;

- la barre noire (barre de droite) correspond à une distance de *Bhattacharyya.*

Les trois distances (respectivement classique, normalisée, et de *Bhattacharyya*) ainsi représentées possèdent toutes une performance de 100% pour ces formes.

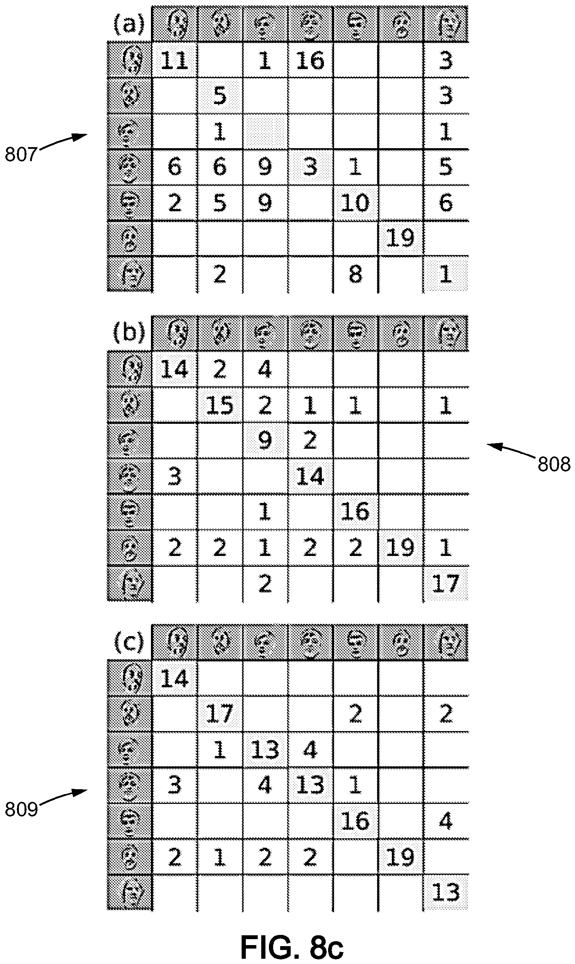

La figure 8c est un exemple de performance de détection de formes (visages).

Chaque tableau (807, 808 et 809) présente le nombre d'occurrences de reconnaissance d'un visage présenté (abscisse) à l'aide de visage appris (ordonnées) pour 19 présentations de ce visage.

Le tableau 807 utilise une distance classique pour effectuer la reconnaissance de visage (taux de reconnaissance : 37%).

Le tableau 808 utilise une distance normalisée pour effectuer la reconnaissance de visage (taux de reconnaissance : 78%).

Le tableau 808 utilise une distance de *Bhattacharyya* pour effectuer la reconnaissance de visage (taux de reconnaissance : 79%).

Par ailleurs, le schéma fonctionnel présenté sur la figure 5 est un exemple typique d'un programme dont certaines instructions peuvent être réalisées auprès du dispositif décrit. À ce titre, la figure 5 peut correspondre à l'organigramme de l'algorithme général d'un programme informatique au sens de l'invention.

Bien entendu, la présente invention ne se limite pas aux formes de réalisation décrites ci-avant à titre d'exemple ; elle s'étend à d'autres variantes.

D'autres réalisations sont possibles.

Par exemple, les contextes types des figures 6a à 6c peuvent être de n'importe quelles dimensions.

## Revendications

1. Procédé de reconnaissance de formes dans un signal asynchrone produit par un capteur de lumière, le capteur ayant une matrice de pixels disposée en regard d'une scène, le procédé comprend :

    /a/ l'exécution d'un procédé de traitement d'un signal asynchrone suivant :

    - recevoir du capteur de lumière le signal asynchrone (500) comprenant, pour chaque pixel de la matrice, des événements successifs issus dudit pixel ;
    - analyser (501) le signal asynchrone à l'aide de profils d'activité au fur et à mesure de la réception d'événements dans le signal asynchrone ;

    /b/ au fur et à mesure de la réception des événements, pour chaque pixel (*p*) courant dudit capteur :

    /b1/ détermination (501) d'un contexte ($S_p$) pour ledit pixel courant, ledit contexte ($S_p$) étant défini comme un ensemble de profils d'activité de pixels situés à moins d'une distance prédéterminée dudit pixel (*p*) courant,
    /b2/ détermination d'un contexte type ($C_k$) parmi un ensemble de contextes types (504) prédéterminés, le contexte type déterminé ayant, parmi l'ensemble des contextes types, une distance au contexte déterminé à l'étape /b1/ minimum,

    /c/ détermination (521) d'une signature fonction d'un nombre d'occurrences de détermination des contextes types à l'étape /b2/ ;

/d/ détermination (524) d'une forme par une comparaison de ladite signature avec une base de signature types ;

dans lequel le profil d'activité comprend au moins, pour chaque pixel (*p*) du capteur, une valeur d'activité ($S(\boldsymbol{p})$) qui décroît en fonction du temps (t) écoulé depuis un événement le plus récent (310, 311, 312, 313, 314, 320, 321, 322) parmi les événements successifs issus dudit pixel.

**2.** Procédé de reconnaissance de formes dans un signal asynchrone produit par un capteur de lumière, le capteur ayant une matrice de pixels disposée en regard d'une scène, le procédé comprend, un modèle hiérarchique de contextes types étant définis, chaque contexte type étant associé à une pluralité de niveau du modèle hiérarchique :

/a/ utilisation d'événements du signal asynchrone du capteur comme événements courants et utilisation des contextes types du premier niveau du modèle hiérarchique comme contextes types courants ;
/b/ exécution d'un procédé de traitement d'un signal asynchrone suivant :

- recevoir les événements courants ;
- analyser (501) le signal asynchrone à l'aide de profils d'activité au fur et à mesure de la réception d'événements courant ;

/c/ au fur et à mesure de la réception des événements courants, pour chaque pixel (p) courant dudit capteur :

/c1/ détermination (501) d'un contexte ($S_p$) pour ledit pixel courant, ledit contexte ($S_p$) étant défini comme un ensemble de profils d'activité utilisés à l'étape /b/ pour des pixels situés à moins d'une distance prédéterminée dudit pixel (*p*) courant,
/c2/ détermination d'un contexte type ($C_k$) parmi les contextes types courants (504), le contexte type déterminé ayant, parmi l'ensemble des contextes types courants, une distance au contexte déterminé à l'étape /c1/ minimum,
/c3/ génération d'un événement fonction du contexte type identifié à l'étape /c2/ ;

/d/ si un niveau du modèle hiérarchique n'a pas été utilisé :

- utilisation des événements générés à l'étape /c3/ comme événements courants,
- utilisation des contextes types d'un niveau du modèle hiérarchique non encore utilisé comme contextes types courants ;
- réexécution des étapes /b/ à /e/ ;

/e/ si tous les niveaux du modèle hiérarchique ont été utilisés :

- détermination (521) d'une signature fonction d'un nombre d'occurrences de détermination des contextes types à la dernière occurrence de l'étape /c2/ ;
- détermination (524) d'une forme par une comparaison de ladite signature avec une base de signatures types;

dans lequel le profil d'activité comprend au moins, pour chaque pixel (p) du capteur, une valeur d'activité (S(p)) qui décroît en fonction du temps (t) écoulé depuis un événement le plus récent (310, 311, 312, 313, 314, 320, 321, 322) parmi les événements successifs issus dudit pixel.

**3.** Procédé selon l'une des revendications précédentes, dans lequel le profil d'activité décroît exponentiellement en fonction du temps (t) écoulé depuis un événement le plus récent (310, 311, 312, 313, 314, 320, 321, 322) parmi les événements successifs issus dudit pixel.

**4.** Procédé selon l'une des revendications précédentes, dans lequel le profil d'activité est en outre en fonction du temps (t) écoulé depuis un événement antérieur à l'événement le plus récent (310, 311, 312, 313, 314, 320, 321, 322) parmi les événements successifs issus dudit pixel.

**5.** Procédé selon l'une des revendications précédentes, dans lequel la détermination d'un contexte prend en compte, séparément, les événements ayant des polarités différentes.

**6.** Procédé selon la revendication 2, dans lequel la comparaison de l'étape /e/ comporte le calcul d'une distance de *Bhattacharyya.*

7. Procédé selon la revendication 2, dans lequel la comparaison de l'étape /e/ comporte le calcul d'une distance normalisée.

8. Produit-programme informatique comportant des instructions pour la mise en oeuvre du procédé selon l'une des revendications 1 à 7, lorsque ce programme est exécuté par un processeur.

**Patentansprüche**

1. Verfahren zum Erkennen von Formen in einem von einem Lichtsensor erzeugten asynchronen Signal, wobei der Sensor eine gegenüber einer Szene angeordnete Pixelmatrix hat, wobei das Verfahren aufweist:

/a/ das Durchführen eines Verfahrens zur Verarbeitung eines asynchronen Signals wie folgt:

- Empfangen des asynchronen Signals (500), das für jedes Pixel der Matrix aus dem Pixel hervorgehende sukzessive Ereignisse aufweist, mit Hilfe des Lichtsensors;
- Analysieren (501) des asynchronen Signals mit Hilfe von Aktivitätsprofilen entsprechend dem Empfang von Ereignissen in dem asynchronen Signal;

/b/ entsprechend dem Empfang der Ereignisse für jedes aktuelle Pixel (p) des Sensors:

/b1/ Bestimmen (501) eines Kontextes (Sp) für das aktuelle Pixel, wobei der Kontext (Sp) als eine Menge von Aktivitätsprofilen von Pixeln definiert ist, die weniger als einen vorgegebenen Abstand von dem aktuellen Pixel (p) angeordnet sind,
/b2/ Bestimmen eines Kontext-Typs (Ck) aus einer Menge von vorgegebenen Kontext-Typen (504), wobei aus der Menge von Kontext-Typen der bestimmte Kontext-Typ einen minimalen Abstand von dem in dem Schritt /b1/ bestimmten Kontext hat,

/c/ Bestimmen (521) einer Signatur abhängig von einer Bestimmungsfallzahl der Kontext-Typen in dem Schritt /b2/;
/d/ Bestimmen (524) einer Form durch Vergleichen der Signatur mit einer Basis von Signatur-Typen;

wobei für jedes Pixel (p) des Sensors das Aktivitätsprofil mindestens einen Aktivitätswert (S(p)) aufweist, der als Funktion der Zeit (t) abnimmt, die seit einem jüngsten Ereignis (310, 311, 312, 313, 314, 320, 321, 322) der aus dem Pixel hervorgehenden sukzessiven Ereignissen vergangen ist.

2. Verfahren zum Erkennen von Formen in einem von einem Lichtsensor erzeugten asynchronen Signal, wobei der Sensor eine gegenüber einer Szene angeordnete Pixelmatrix hat, wobei, wenn ein hierarchisches Modell von Kontext-Typen definiert ist und jeder Kontext-Typ mit mehreren Ebenen des hierarchischen Modells verknüpft ist, das Verfahren aufweist:

/a/ Verwenden von Ereignissen des asynchronen Signals des Sensors als aktuelle Ereignisse und Verwenden der Kontext-Typen der ersten Ebene des hierarchischen Modells als aktuelle Kontext-Typen;
/b/ Durchführen eines Verfahrens zur Verarbeitung eines asynchronen Signals wie folgt:

- Empfangen der aktuellen Ereignisse;
- Analysieren (501) des asynchronen Signals mit Hilfe von Aktivitätsprofilen entsprechend dem Empfang von aktuellen Ereignissen;

/b/ entsprechend dem Empfang der aktuellen Ereignisse für jedes aktuelle Pixel (p) des Sensors:

/c1/ Bestimmen (501) eines Kontextes (Sp) für das aktuelle Pixel, wobei der Kontext (Sp) als eine Menge von Aktivitätsprofilen definiert ist, die in dem Schritt /b/ für Pixel verwendet wurden, die weniger als einen vorgegebenen Abstand von dem aktuellen Pixel (p) angeordnet sind,
/c2/ Bestimmen eines Kontext-Typs (C$_k$) aus den aktuellen Kontext-Typen (504), wobei aus der Menge der aktuellen Kontext-Typen der bestimmte Kontext-Typ einen minimalen Abstand von dem in dem Schritt /c1/ bestimmten Kontext hat,
/c3/ Erzeugen eines Ereignisses abhängig von dem in dem Schritt /c2/ definierten Kontext-Typ;

/d/ wenn eine Ebene des hierarchischen Modells nicht verwendet worden ist:

- Verwenden der in dem Schritt /c3/ erzeugten Ereignisse als aktuelle Ereignisse,
- Verwenden von Kontext-Typen einer noch nicht verwendeten Ebene des hierarchischen Modells als aktuelle Kontext-Typen;
- erneutes Durchführen der Schritte /b/ bis /e/;

/e/ wenn alle Ebenen des hierarchischen Modells verwendet worden sind:

- Bestimmen (521) einer Signatur abhängig von einer Bestimmungsfallzahl der Kontext-Typen in dem letzten Fall des Schritts /c2/;
- Bestimmen (524) einer Form durch Vergleichen der Signatur mit einer Basis von Signatur-Typen;

wobei für jedes Pixel (p) des Sensors das Aktivitätsprofil mindestens einen Aktivitätswert ($S(p)$) aufweist, der als Funktion der Zeit (t) abnimmt, die seit einem jüngsten Ereignis (310, 311, 312, 313, 314, 320, 321, 322) der aus dem Pixel hervorgehenden sukzessiven Ereignisse vergangen ist.

3. Verfahren nach einem der vorstehenden Ansprüche, wobei das Aktivitätsprofil exponentiell als Funktion der Zeit (t) abnimmt, die seit einem jüngsten Ereignis (310, 311, 312, 313, 314, 320, 321, 322) der aus dem Pixel hervorgehenden sukzessiven Ereignisse vergangen ist.

4. Verfahren nach einem der vorstehenden Ansprüche, wobei das Aktivitätsprofil ferner eine Funktion der Zeit (t) ist, die seit einem Ereignis, das älter als das jüngste Ereignis (310, 311, 312, 313, 314, 320, 321, 322) der aus dem Pixel hervorgehenden sukzessiven Ereignisse ist, vergangen ist.

5. Verfahren nach einem der vorstehenden Ansprüche, wobei die Bestimmung eines Kontextes die Ereignisse, die unterschiedliche Polaritäten haben, separat berücksichtigt.

6. Verfahren nach Anspruch 2, wobei der Vergleich des Schritts /e/ die Berechnung eines Bhattacharyya-Abstands aufweist.

7. Verfahren nach Anspruch 2, wobei der Vergleich des Schritts /e/ die Berechnung eines normalisierten Abstands aufweist.

8. Computerprogrammprodukt aufweisend Befehle zum Durchführen des Verfahrens nach einem der Ansprüche 1 bis 7, wenn dieses Programm von einem Prozessor ausgeführt wird.


**Claims**

1. Method for recognising shapes in an asynchronous signal produced by a light sensor, the sensor having a pixel matrix disposed opposite a scene, the method comprising:

/a/ the execution of a method for processing an asynchronous signal, as following:

- receiving from the light sensor the asynchronous signal (500) comprising, for each pixel of the matrix, successive events from said pixel;
- analysing (501) the asynchronous signal using activity profiles as events are received in the asynchronous signal;

/b/ as events are received, for each current pixel (**p**) of said sensor:

/b1/ determination (501) of a context ($S_p$) for said current pixel, said context ($S_p$) being defined as a set of activity profiles of pixels located less than a predetermined distance from said current pixel (**p**),
/b2/ determination of a typical context ($C_k$) from a set of predetermined typical contexts (504), with the typical context determined having, from the set of typical contexts, a minimum distance to the context determined in the step /b1/,

/c/ determination (521) of a signature as a function of a number of occurrences of determination of typical contexts in the step /b2/;
/d/ determination (524) of a shape through a comparison of said signature with a base of signature types;

wherein the activity profile comprises at least, for each pixel ($p$) of the sensor, an activity value ($S(p)$) that decreases as a function of the time ($t$) that has passed since the most recent event (310, 311, 312, 313, 314, 320, 321, 322) among the successive events from said pixel.

2. Method for recognising shapes in an asynchronous signal produced by a light sensor, the sensor having a pixel matrix disposed opposite a scene, the method comprises, a hierarchical model of typical contexts being defined, each typical context being associated with a plurality of levels of the hierarchical model:

/a/ usage of events of the asynchronous signal of the sensor as current events and usage of typical contexts of the first level of the hierarchical model as current type contexts;
/b/ execution of the method for processing an asynchronous signal, as following:

- receiving the current events;
- analysing (501) the asynchronous signal using activity profiles as current events are received;

/c/ as current events are received, for each current pixel ($p$) of said sensor:

/c1/ determination (501) of a context ($S_p$) for said current pixel, with the said context ($S_p$) being defined as a set of activity profiles used in the step /b/ for pixels located less than a predetermined distance from said current pixel ($p$),
/c2/ determination of a typical context ($C_k$) from the current typical contexts (504), with the determined typical context having, among all of the current typical contexts, a minimum distance to the context determined in the step /c1/,
/c3/ generation of an event as a function of the typical context identified in the step /c2/;

/d/ if a level of the hierarchical model has not been used:

- usage of the events generated in the step /c3/ as current events,
- usage of the typical contexts of a level of the hierarchical model not yet used as current typical contexts;
- re-execution of the steps /b/ to /e/;

/e/ if all of the levels of the hierarchical model have been used:

- determination (521) of a signature as a function of a number of occurrences of determination of typical contexts at the last occurrence of the step /c2/;
- determination (524) of a shape through a comparison of said signature with a base of typical signatures.

3. Method according to one of the preceding claims, wherein the activity profile decreases exponentially as a function of time ($t$) that has passed since the most recent event (310, 311, 312, 313, 314, 320, 321, 322) among the successive events from said pixel.

4. Method according to one of the preceding claims, wherein the activity profile is furthermore as a function of time ($t$) that has passed since an event prior to the most recent event (310, 311, 312, 313, 314, 320, 321, 322) among the successive events from said pixel.

5. Method according to one of the preceding claims, wherein the determination of a context takes into account, separately, the events having different polarities.

6. Method according to claim 2, wherein the comparison of the step /e/ comprises the calculation of a *Bhattacharyya* distance.

**7.** Method according to claim 2, wherein the comparison of the step /e/ comprises the calculation of a standardised distance.

**8.** Computer program product comprising instructions for the implementing of the method according to one of claims 1 to 7, when this program is executed by a processor.

**FIG. 1**

**FIG. 2**

FIG. 3a

EP 3 271 869 B1

FIG. 3b

EP 3 271 869 B1

FIG. 3c

FIG. 3d

FIG. 4

500 FLU_ASY

i

501 DET_S (p;t$_i$)  p

503 CONT_TYP_1 {C$_{k\_1}$}

502 EXT_CONT  p

504 ID_C$_{k\_1}$_PROX  p CONT

505 GEN_EVEN  p

**FIG. 5**

506 FLU_ASY1

j

511 DET_S (p;t$_j$)  p

513 CONT_TYP_2 {C$_{k\_2}$}

512 EXT_CONT  p

525 FORM

514 ID_C$_{k\_2}$_PROX  p CONT

524 DET_FORM

515 GEN_EVEN  p

523 $\mathcal{H}$_TYP

522 DET_$\mathcal{H}$_PRO

516 FLU_ASY2

521 DET_$\mathcal{H}$

520 COMP_CONT_TYP

p

517 ? OK

FIG. 6a

FIG. 7

FIG. 6b

FIG. 6c (1)

FIG. 6c (2)

FIG. 8a

FIG. 8b

**(a)**

| | | | | | | |
|---|---|---|---|---|---|---|
| 11 | | 1 | 16 | | | 3 |
| | 5 | | | | | 3 |
| | 1 | | | | | 1 |
| 6 | 6 | 9 | 3 | 1 | | 5 |
| 2 | 5 | 9 | | 10 | | 6 |
| | | | | | 19 | |
| | 2 | | | 8 | | 1 |

807

**(b)**

| | | | | | | |
|---|---|---|---|---|---|---|
| 14 | 2 | 4 | | | | |
| | 15 | 2 | 1 | 1 | | 1 |
| | | 9 | 2 | | | |
| 3 | | | 14 | | | |
| | | 1 | | 16 | | |
| 2 | 2 | 1 | 2 | 2 | 19 | 1 |
| | | 2 | | | | 17 |

808

**(c)**

| | | | | | | |
|---|---|---|---|---|---|---|
| 14 | | | | | | |
| | 17 | | | 2 | | 2 |
| | 1 | 13 | 4 | | | |
| 3 | | 4 | 13 | 1 | | |
| | | | | 16 | | 4 |
| 2 | 1 | 2 | 2 | | 19 | |
| | | | | | | 13 |

809

## FIG. 8c

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T. DELBRÜCK et al.** Activity-Driven, Event-Based Vision Sensors. *Proceedings of 2010 IEEE International Symposium on Circuits and Systems (ISCAS),* 2426-2429
- Asynchronous Event-Based Visual Shape Tracking for Stable Haptic Feedback in Microrobotics. **ZHENJIANG N. et al.** IEEE TRANSACTIONS ON ROBOTICS. IEEE SERVICE CENTER, 01 Octobre 2012, vol. 28, 1081-1089
- Event-driven embodied system for feature extraction and object recognition in robotic applications. **WIESMANN G. et al.** COMPUTER VISION AND PATTERN RECOGNITION WORKSHOPS (CVPRW), 2012 IEEE COMPUTER SOCIETY CONFERENCE ON. IEEE, 16 Juin 2012, 76-82
- A real-time pedestrian classification method for event-based dynamic stereo vision. **SCHRAML S. et al.** COMPUTER VISION AND PATTERN RECOGNITION WORKSHOPS (CVPRW), 2010 IEEE COMPUTER SOCIETY CONFERENCE ON. IEEE, 13 Juin 2010, 93-99
- **ORCHARD G. et al.** HFirst: A Temporal Approach to Object Récognition. *IEEE TRANSACTIONS ON PATTERN ANALYSIS AND MACHINE INTELLIGENCE,* 14 Janvier 2015, vol. 37 (10), ISSN 0162-8828, 2028-2040
- **D. BALLARD ; J. JEHEE.** Dynamic coding of signed quantifies in cortical feedback circuits. *Frontiers in Psychology,* 2012, vol. 3 (254